# EUROPEAN PATENT SPECIFICATION

(11) **EP 1 045 610 B1**
(45) Date of publication and mention of the grant of the patent: **09.04.2008**
(21) Application number: 00103966.8
(22) Date of filing: 25.02.2000
(51) Int. Cl.: H04Q 11/04, H04L 25/14

(54) **Method for resynchronizing a group of B channels in an ISDN network**
Verfahren zur Neusynchronisierung einer Gruppe von B Kanäle in einem ISDN Netzwerk
Méthode de resynchronisation d'un groupe de canaux B dans un réseau RNIS

(30) Priority: 12.04.1999 EP 99107070
(43) Date of publication of application: 18.10.2000
(73) Proprietor: International Business Machines Corporation, Armonk, NY 10504 (US)
(72) Inventor: Amann, Eberhard, 72108 Rottenburg (DE); Hermann, Helga, 70771 Leinfelden-Echterdingen (DE); Saalmüller, Jürgen Dr., 71034 Böblingen (DE)
(74) Representative: Duscher, Reinhard

(56) References cited:
- EP-A- 0 436 293
- EP-A- 0 766 493
- EP-A- 1 045 612
- US-A- 4 775 987
- "ISDN References" INTERNET, [Online] 17 October 1996 (1996-10-17), XP002112856 Retrieved from the Internet: URL:http://www.inteva.com/customer3/troubl e/isdn.htm> [retrieved on 1999-08-19]

## Description

This invention relates to an ISDN network interface on networking equipment. More particularly, the invention applies to the resynchronization of a group of B Channels in an ISDN network. Still more specifically, this invention relates to such a method that reissues the sequence of initial synchronization as described in BONDING™ (Trademerk of the Bonding Consortium) mode 1.

### BACKGROUND ART

Backbones for local area network (LAN) connections within large companies but also connections between companies (World Wide Web - www) are presently typically operated using proprietary or leased glass fiber networks with an ATM protocol. For the backup of dropped out connections or when an increase of bandwidth is necessary the additional bandwidth is achieved by bundling several digital telephone channels (Bearer channels) of the public switched network.

Using one Bearer channel (B channel), a bandwidth of 64 kbit/s can be achieved. Typically, 24 (T1 standard) or 30 (E1 standard) of these channels are contained in a primary multiplex line, providing a raw datarate of up to 2 Mbit/s when fully utilized.

It is, however, problematic that network suppliers can give no warranty that all these B channels are synchronously run with respect to each other when using such telephone channels of the public network for backup or increase of bandwidth. Certainly the whole telephone network is operated by a synchronous clock, however, differences in transmit time between the respecitve channels bundled together can occur. The contents of the data packages (ATM frames) which are transmitted multiplexed in these channels, may not reach the addressee in the original form, because the different data packets will pass different paths on their way from the sender to the receiver. In addition, there will be no warranty that the individual channels will follow a certain sequence (channel shuffling) when arriving at the addressee. This problem is also known from the field of picture telephony.

The inverse multiplexing function converts a wideband communication on a high speed link into a group of combined switched channels. This function is very useful when using, e.g., 2 Mbit/s bandwidth on ISDN B channels of 56 or 64 kbit/s for conveying. For instance, the European primary ISDN (Integrated Services Digital Network) provides 30 B channels for data and one channel for call control (D channel) while Basic Rate ISDN provides 2 B channels for data and also one D channel for control.

The problem of inverse multiplexing is to be able to resynchronize the channels in order to rebuild the high speed link on the remote (receiving) side of an established link between two peer stations A and B via the ISDN network. As the established link can be used in full duplex mode this is true for both directions, i.e. the path A→B may have different characteristics compared to the path B→A. That means the inverse multiplexing has to be done symetrically at each receiving station.

To solve this problem, the BONDING (Bandwidth On Demand Interoperability Group) specifications written by the BONDING consortium on September 1, 1992 (and later releases) give some guidance. These specifications define a frame structure and procedures for establishing a wideband communication connection by combining multiple switched 56/64 kbit/s channels as shown in the following figure.

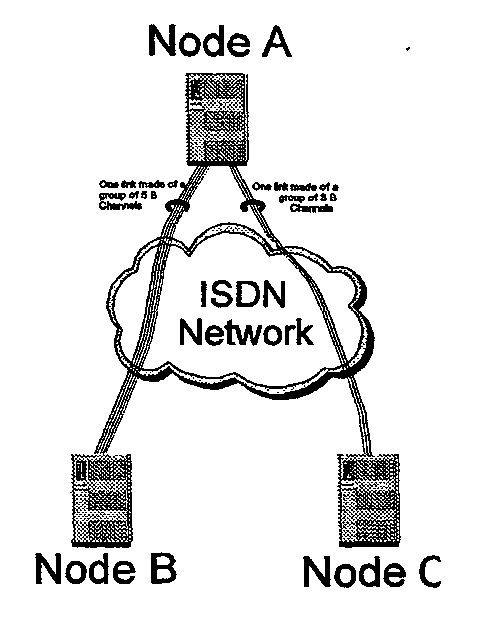

Provided is a high speed serial data stream by use of multiple, independent 56/64 kbit/s channels. These channels are individually connected over the switched digital network (public, private, etc.). At the transmitting end, user data are placed in repeated frames in B channels and transmitted over multiple, independent channels. The B channel is the network provided channel used to carry the data. At the receiving end, all channels are phase aligned and synchronized by use of an apparatus that makes data usuable again on the receiver side. This apparatus hereinafter is called Inverse Multiplex Unit (IMU). It has to be noted that the invention is not restricted to the IMU described herein but that all kind of apparatus can be used which is able to cancel the respective delays and makes the data usuable again on the receiver side.

Because the channels used for the wideband connection are routed through the network independently of each other, the data in each channel might be individually delayed relative to the data in other channels. Overall transit delay for the end-to-end connection is equal to the longest transit delay from all the channels plus a constant delay due to the data reordering executed by the receiving IMU function that depends on implementation.

To allow for correct realignment of the data transmitted a training sequence has to be executed in advance each time when several channels are set-up for the high speed link. A special framing pattern is exchanged between both locations participating at the connection. The analysis of the pattern at the receiving side allows for exact calculation of delays introduced by the switched network.

Once aligned, data transfer can be constantly monitored throughout the call. The failure of a channel, for reasons such as call disconnection, phase slip or high error rate, can be automatically detected. Various fault isolation and recovery procedures are defined in response to these scenarios.

The BONDING specification shows four modes of operation:
BONDING Mode 0 provides initial parameter negotiation and Directory Number exchange over the master channel, then reverts to data transmission without delay equalization. This mode is useful when the calling endpoint requires Directory Numbers, but the delay equalization is performed by some other means (e.g., attached video codec).
BONDING Mode 1 supports user data rates multiples of the bearer rate. It provides the user data rate with the full available bandwidth, but does not provide an in-band monitoring function. It provides a solution for sending an initial set of frames, the so called training sequence, to synchronize (phase align) the sending of multiplexed data for a correct demultiplexing of that high speed data channel on the other side of the network. Error conditions on one or more channels that disturb overall system synchronization are not recognized automatically.
Other options in BONDING specifications propose the use of other BONDING modes on both sides of the network to provide a warranty for the quality of the transmission:
Mode 2 and Mode 3; both of them are based on Mode 1 but with improvements for transmission quality by using data transfer frames including some bits dedicated to store transmission information allowing transmission quality analysis or recovery which are read on the other side of the network. This is quite costly, a part of the bandwidth being used for transport of control information.
For Mode 2 the effective B channel rate is reduced by 1/64. Mode 3 requires one additional B channel switched for control overhead.

BONDING Mode 1 is the most used as being more simple, the quality monitoring and failure recovery being generally performed at some upper layer of the application using the BONDING function.

However, performing the above mentioned training sequence and the subsequent compensation of the data flow (sustained 2 Mbit/s) at the receiver or, because of full duplex mode, at both sides, is a technical challenge and performance intensive. The training sequence has to be performed each time a connection is set up, i.e., before each data transfer. Since each byte has to be processed, this approach is very costly. The straight forward implementation is done using special ASICs or a number of signal processors.

The IBM European application FR 999 010, filed the same day, discloses a method assigning roles as initiator & completor to both network side of a group of bonded channels; one side acting as initiator informs the opposite side acting as completor to request the resynchronization of the selected group of bonded channels by means of a NOTIFY message sent over the D-channel and has the call reference of the group master channel connection thus allowing the completor side to identify the selected group of bonded channels; the initiator side waits for an acknowledgment from the completor side; upon the reception of the NOTIFY message sent by the initiator side, the completor side informs the initiator side by sending another NOTIFY message to the initiator side over the D-channel having the call reference of the group master channel connection; the completor side requests to the local IMU the resynchronization of the selected group of bonded channels; upon reception of the acknowledging NOTIFY message sent by the completor side, the initiator side requests to the local IMU the resynchronization of the selected group of bonded channels.

The deficiency of using BONDING mode 1 is the lack of checking for valid resynchronization on received user data stream. A problem occurs with standard implementation for Mode 1 where the normal recovery procedure means to disconnect the physical links and re-establish the group.

It is therefore an object of the present invention to provide an extension of the BONDING mode 1 that allows for a simple, reliable synchronization procedure thereby reducing the time and network load required for resynchronization.

It is a further object of the inventione to provide such an extension that allows keeping a simpler IMU compared to the BONDING 2 mode and mode 3 solutions.

These and other objects and advantages are achieved using the method of claim 1.

Advantageous embodiments are laid down in the dependent claims.

### SUMMARY OF THE INVENTION

An extension of the BONDING mode 1 is proposed by allowing the application user to resynchronize a group of B channels by reissuing the sequence of initial synchronization as described in BONDING mode 1 but without intermediate disconnect of the group of B channels. The advantage of this solution is to improve the reliability of the bonded channels while keeping a simpler IMU compared to the Bonding mode 2 and mode 3 solutions on one hand and to reduce the time and network load required for resynchronization tremendously.

Extension of the BONDING mode 1 is proposed by allowing the application using the BONDING function, when a loss of synchronization between channels occurs, to resynchronize a group of channels by reissuing the sequence of initial synchronization as described in BONDING mode 1. A request for resynchronization is sent by the adapter from one side of the ISDN network to the other side once a failure in the connection has been detected. The advantage of this solution is to improve the reliability of the bonded channels while keeping a simpler Inverse Multiplexing function, compared to BONDING mode 2 and BONDING mode 3 solutions. Furthermore, the resynchronization can be carried out without intermediate disconnect of the respective group of B channels.

As for the training sequence, the resynchronization can be achieved on one group of channels at a time (there is no restriction in the apparatus to handle more than one group in parallel except of performance of the processor used). The principle is to detect on an upper layer which is related to the control of user data transport (e.g. layer 3 of Open Systems Interconnect [OSI] model) a continuous failure in integrity of received frames and to send a request for resynchronization from this higher layer to the IMU function. This resynchronization is initiated on both ends for the respecive group independently by a transition from data phase to the initial synchronization and training phase but avoiding thereby the disconnection and reconnection of the respective channels of the group affected.

### DETAILED DESCRIPTION OF THE PREFERRED EMBODIMENT

As mentioned above the deficiency of BONDING Mode 1 is the lack of checking for valid resynchronization on received user data stream. On the other hand implementation of Mode 2 or 3 cost a lot more performance, makes the handling more difficult and generates additional operating cost due to additional bandwidth required. An equivalent monitoring of synchronization can be achieved even using Mode 1 if a higher level protocol on user data level can be applied for the survey of synchronization of transmitted data. The high speed network protocols typically used (e.g. ATM) provide such function on the transport layer. The continuous failure in data integrity check on this layer can be used as an indication that the reordering on the receiving side of an IMU is no more correct and a new synchronization (re-training) sequence has to be initiated. A problem occurs with standard implementation for Mode 1 where the normal recovery procedure means to disconnect the physical links and to re-establish the group. This time consuming procedure can generate additional load on the switched network and may take too much time and therefore could enforce time-out conditions in the retry actions of the higher layers of communication or even a disconnect on application layer.

Because the loss of synchronization does not change the actual setup of a group there is no need to drop and re-establish the connection, only the training phase needs to be reentered and the delays between the channels of the group must be re-calculated. This can be done in a much shorter amount of time than using a disconnect, reconnect and synchronisation procedure.

Beyond the scope of BONDING specification a new command is introduced to resynchronize a group which is called 'Try to resynch' in the implementation. In the following protocol sequences different szenarios are shown in case of loss of synchronization between B channels of a group caused by a phase slip occuring during connection while training was already completed and user data are exchanged between the two stations involved.

The sequence below shows the improved resynchronization without disconnecting the channels participating in a group:

Due to the indication from upper layer protocol the state machine handling the different states of an IMU gets a request for 'Try to resynch'. The first IMU (Station 1) that gets this command switches from user data mode to resynchronisation mode, starts to send synchronization patterns and confirms this state transit to higher level protocol ("Try to resynch confirm"). The second IMU (Station 2) gets the same indication from the upper layer protocol asynchronously to the first IMU by a process as described in the co-pending application FR 999..., assigned to the same assignee. The IMU on Station 2 also starts by a "Try to resynch req" to send out synchronization patterns for all channels of the group affected. After completion of the training the delays are recalculated and tables updated. A "lsynch_ind" response sent on both sides to the higher level protocol indicates the regain of synchronization and exchange of user data can continue.

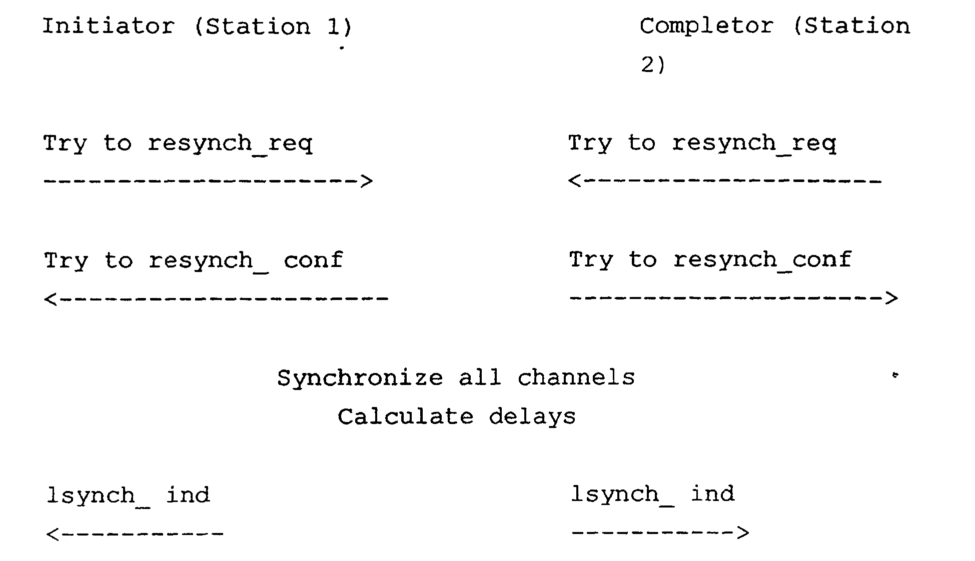

The same scenario described above based on basic BONDING protocol (disconnect, reconnect, resynchronization) looks like this:

Due to the indication from upper layer protocol the state machine handling the different states of an IMU gets a request for 'abort'. The first IMU (Station 1) that gets this command releases the user data mode for the respective group and resolves the whole group (abort request, confirm and indication). The call control function (that handles link establishment via D channel) initiates the link release of all channels of that group by standard disconnect procedure. Station 2 gets the indication, that all channels of the respective group are disconnected and resolves also the group affected. Station 1 restarts now a standard connect procedure sending a connect request on first channel of the group, negotiates the parameters with Station 2 (number of channels etc.) and accepts the parameters. Both stations continue to establish the additional links for that group sending connect requests to the network and getting the confirmations (in the example below additional 4 channels are allocated to the group). Up to this point all this overhead was reduced in the upper example avoiding the disconnection of all links and only falling back to synchronization state. The sequence shown below continues the same way like shown above by executing the synchronization of all channels for the respective group but may have to execute additionally a reordering of the channels at receiving side due to new link establishment. As stated above all this additional overhead to disconnect and re-establish all the links of the group is very time consuming and generates additional network load.

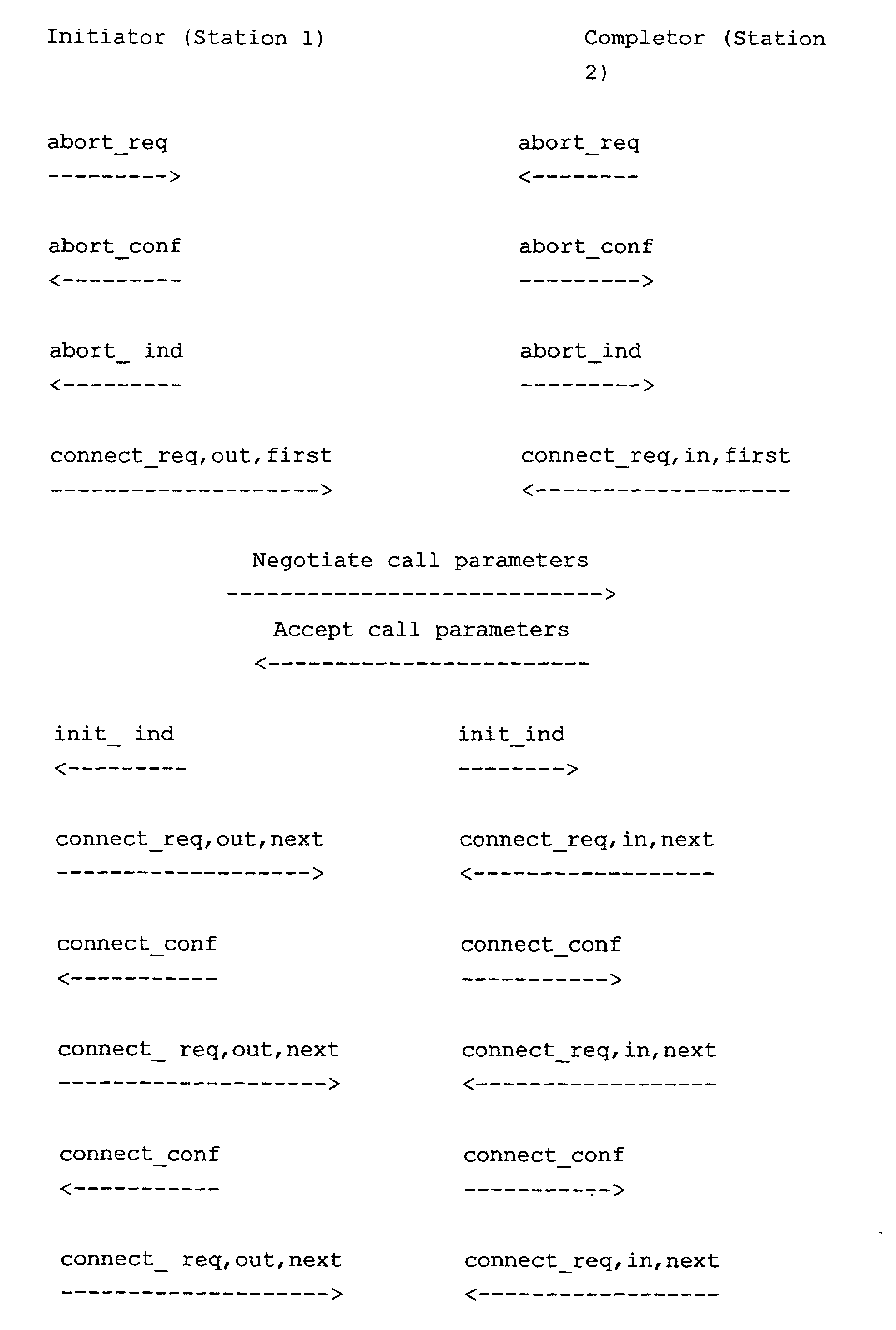

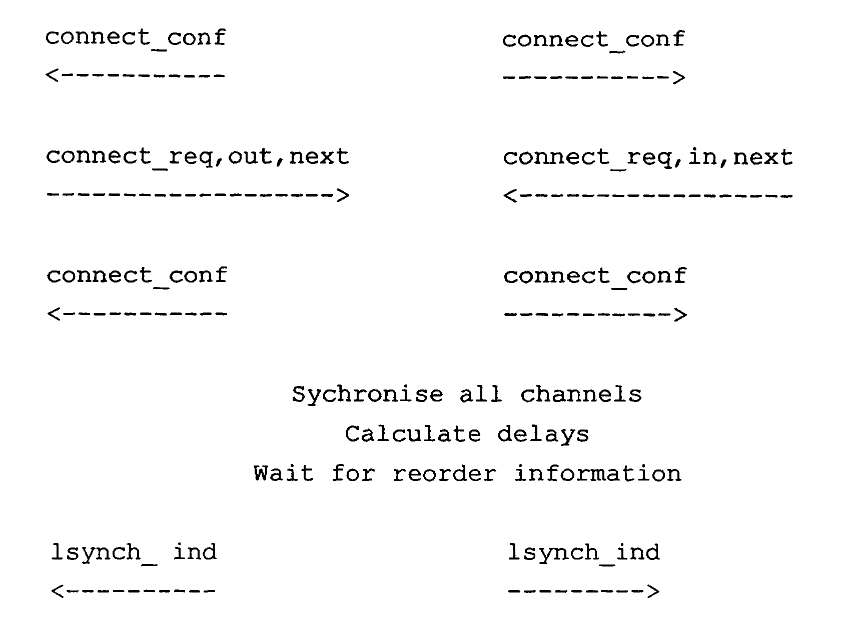

The above described method allows to improve the reliability of the bonded channels while keeping a simpler IMU compared to the Bonding mode 2 and mode 3 solutions on one hand and to reduce the time and network load required for resynchronization tremendously. By using this method, a resynchronization can be achieved without the necessity to diconnect the respective group of B channels.

## Claims

1. Method for resynchronizing a group of B channels in an ISDN network, using the BONDING mode 1 of the BONDING protocol,
**characterized in that**
said resynchronization is carried out without intermediate disconnect of said group of B channels.

2. Method according to claim 1, wherein the resynchronization can be achieved for more than one group of B channels at a time.

3. Method according to claim 1, wherein an upper level protocol layer above the bonding protocol, being related to the control of user data transport, is used to detect continuous failures.

4. Method according to claim 1, wherein said resynchronization is initiated on both sides of said network.

## Patentansprüche

1. Verfahren zur Neusynchronisierung einer Gruppe von B-Kanälen in einem ISDN-Netz unter Verwendung des BONDING-Modus 1 des BONDING-Protokolls,
**dadurch gekennzeichnet, dass**
die Neusynchronisierung ohne zwischenzeitliche Trennung der Gruppe von B-Kanälen durchgeführt wird.

2. Verfahren nach Anspruch 1, bei dem die Neusynchronisierung jeweils für mehr als eine Gruppe von B-Kanälen erreicht werden kann.

3. Verfahren nach Anspruch 1, bei dem eine über dem BONDING-Protokoll liegende höhere Protokollschicht, die die Steuerung des Transports von Benutzerdaten betrifft, zur Erkennung fortdauernder Ausfälle verwendet wird.

4. Verfahren nach Anspruch 1, bei dem die Neusynchronisierung auf beiden Seiten des Netzes ausgelöst wird.

## Revendications

1. Procédé de resynchronisation d'un groupe de canaux B dans un réseau RNIS, en utilisant le mode BONDING 1 du protocole BONDING,
**caractérisé en ce que**
ladite resynchronisation est exécutée sans déconnexion intermédiaire dudit groupe de canaux B.

2. Procédé selon la revendication 1, dans lequel la resynchronisation peut être réalisée pour plus d'un groupe de canaux B à la fois.

3. Procédé selon la revendication 1, dans lequel une couche de protocole d'un niveau supérieur au-dessus du protocole BONDING, qui se rapporte à la commande du transport de données d'utilisateur, est utilisée pour détecter des défaillances continues.

4. Procédé selon la revendication 1, dans lequel ladite resynchronisation est initiée des deux côtés dudit réseau.
